# DEMANDE DE BREVET EUROPEEN

(11) **EP 0 959 289 A1**
(43) Date de publication de la demande: **24.11.1999**
(21) Numéro de dépôt: 99440088.5
(22) Date de dépôt: 22.04.1999
(51) Int. Cl.: F16L 33/213, F16L 33/00

(54) **Dispositif de connexion pour le raccordement d'un tube sur un interface**

(30) Priorité: 22.04.1998 FR 9805213
(71) Demandeur: M.G.I. Coutier S.A., 01410 Champfromier (FR)
(72) Inventeur: Peyremorte, Olivier, 84170 Monteux (FR)
(74) Mandataire: Nithardt, Roland

(57) **Abrégé**

La présente invention concerne un dispositif de connexion pour le raccordement notamment d'un tube en matière plastique à un interface présentant un embout de forme rigide. Ce dispositif est particulièrement simple, peu onéreux et rapide à monter.

Le dispositif de connexion (1) comprend une partie avant (3) réalisée dans un matériau souple et constituant un manchon (7) monté autour de l'embout de forme (9) de l'interface (8). Il comprend également une partie arrière (2) rigide et présentant des proéminences (4) pour se fixer à l'intérieur du tube en matière plastique (5).

## Description

La présente invention concerne un dispositif de connexion pour le raccordement d'un tube en matière synthétique sur un interface présentant un embout de forme réalisé dans un matériau rigide, comprenant une partie arrière rigide présentant des organes d'accrochage et d'étanchéité pour se fixer au tube en matière synthétique.

Ce type de dispositif de connexion est généralement utilisé dans les circuits de transfert de fluides (refroidissement, carburant, etc.) d'un véhicule automobile. Dans ces circuits, on utilise jusqu'à présent des tubes en caoutchouc qui sont raccordés d'un interface à un autre et maintenus par des colliers métalliques. La forme de l'embout rigide de ces interfaces est souvent spécifique. Elle peut être par exemple olive ou conique. Elle est généralement imposée par le fournisseur de la pièce sur laquelle est greffée l'interface. Il est précisé qu'on appelle interface tout piquage ou raccord sur lequel doit être monté le tube en caoutchouc. Selon une autre variante, lorsqu'un tube rigide en matière synthétique est utilisé, on l'équipe d'une pièce "relais" montée en force et qui est réceptrice d'un manchon ou d'un petit tube en caoutchouc afin d'assurer la liaison. Là aussi, deux colliers métalliques permettent de brider le tube ou les embouts de forme.

Aujourd'hui. les matières plastiques peuvent remplacer les caoutchoucs pour des raisons de gain de poids et de prix. Cela permet également d'améliorer le vieillissement des pièces. Le problème majeur réside dans la connexion car les matériaux plastiques ne sont pas aussi souples ni déformables que les caoutchoucs.

Les différents systèmes existant présentent notamment l'inconvénient d'utiliser de nombreuses pièces pour leur montage qui sera en conséquence long et compliqué. Du fait du nombre important de pièces. ces systèmes ont également un coût de revient élevé.

Il existe également des dispositifs de connexion réalisés en une seule pièce dans une matière rigide, tels que décrits dans les publications FR-A-1 160 833 et US-A-4 664 423. Pour raccorder deux éléments rigides, ces dispositifs comportent à l'extrémité arrière des organes d'accrochage et à l'extrémité avant un filetage afin de pouvoir être vissés sur l'élément rigide. Cela signifie d'une part une perte de temps à la fabrication pour réaliser le filetage, une perte de temps au montage et d'autre part qu'au moins un des éléments à raccorder doit pouvoir tourner pour assurer le vissage. Ces dispositifs ne sont donc pas utilisables dans tous les cas. De plus, s'il n'est pas prévu de filetage à l'extrémité avant, il n'est pas possible d'y monter un élément rigide puisque la partie avant est elle-même rigide. Dans ce cas, il n'est pas possible de raccorder un tube semi-rigide sur un interface rigide lui aussi.

La présente invention vise à pallier ces inconvénients en proposant un dispositif de connexion simplifié, particulièrement rapide à monter, peu onéreux et qui dans tous les cas peut être monté sur un élément rigide tel qu'un embout de forme.

Dans ce but, l'invention concerne un dispositif de connexion du genre indiqué en préambule, caractérisé en ce qu'il comprend une partie avant réalisée dans un matériau souple et constituant un manchon agencé pour être monté autour de l'interface rigide. De préférence, la partie arrière est montée à l'intérieur du tube.

D'une manière particulièrement avantageuse, les organes d'accrochage et d'étanchéité peuvent être constitués de crans présentant en coupe la forme d'un sapin ou tout autre proéminence permettant un bon accrochage et une bonne étanchéité.

La partie arrière peut être réalisée dans un matériau thermoplastique dur.

Les matières utilisées présentent de bonnes aptitudes au vieillissement combiné température/fluide automobile pour lesquelles elles ont été sélectionnées.

Selon les modes de réalisation, les parties avant et arrière peuvent être assemblées par soudage ou réalisées en une seule pièce par injection bi-matière.

Selon un autre mode de réalisation, les parties avant et arrière peuvent être réalisées dans une même matière souple, la partie arrière étant rigidifiée au moyen d'un insert.

D'une manière avantageuse, le dispositif comprend une butée prévue entre les parties avant et arrière.

La présente invention et ses avantages apparaîtront mieux dans la description suivante de plusieurs exemples de réalisation, en référence aux dessins annexés, dans lesquels:
- la figure 1 représente une vue en perspective d'une première variante du dispositif selon l'invention,
- la figure 2 représente une vue partielle en coupe axiale de la figure 1,
- la figure 3 est une vue du dispositif de la figure 1 monté entre un tube et un interface,
- les figures 4 et 5 représentent deux autres variantes du dispositif selon l'invention.

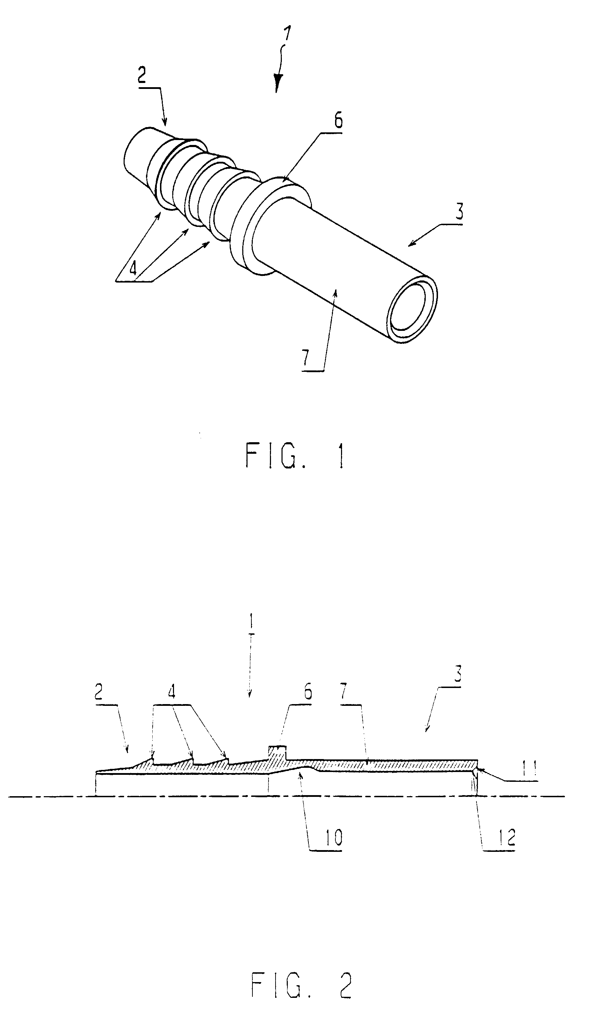

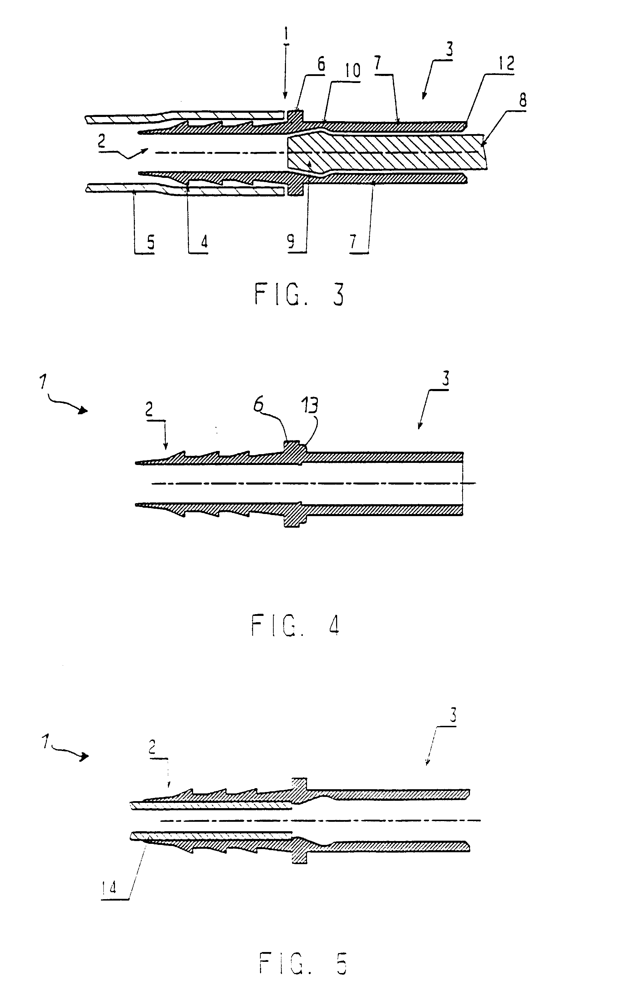

En référence aux figures 1 à 3, le dispositif de connexion 1 comprend une partie arrière 2 et une partie avant 3. La partie arrière 2 est montée à l'intérieur d'un tube 5 en matière synthétique. Ce tube 5 remplace les manchons en caoutchouc utilisés notamment dans les circuits de refroidissement ou ceux utilisés en extrémité des canalisations pour le carburant. La partie arrière 2 est constituée d'un cylindre creux réalisé dans une matière plastique dure. Elle comporte le long de sa surface extérieure des crans 4 présentant en coupe la forme d'un sapin, lesdits crans constituant des organes d'accrochage et d'étanchéité permettant au dispositif de connexion 1 d'être assemblé rigidement au tube 5. Dans la suite de la description, les crans 4 seront appelés "crans sapins". Toutefois, les organes d'accrochage peuvent être constitués par d'autres artifices que les crans sapins, par exemple des "Double Bead". Le diamètre maximum d'un cran 4 est supérieur au diamètre intérieur du tube 5 de manière à être inséré en force.

Entre les parties arrière 2 et avant 3 est prévue un bourrelet annulaire 6 qui constitue une butée sur laquelle vient s'appuyer l'extrémité du tube 5 lors de l'insertion du dispositif de connexion 1. Ce bourrelet 6 permet également de renforcer l'étanchéité de l'ensemble.

La partie avant 3 constitue un manchon 7 monté autour d'un interface 8. Cet interface présente un embout forme olive 9 et est réalisé dans une matière rigide. Le manchon 7 présente la forme d'un cylindre creux réalisé dans une matière plastique souple. La face intérieure 10 de l'extrémité du manchon 7 reliée à la partie arrière 2 est incurvée de manière à présenter une forme complémentaire à l'embout olive 9. Il est bien évident que la face intérieure 10 peut être de forme tout à fait spécifique de manière à s'adapter sur tous les interfaces. Le diamètre intérieur du manchon 7 est légèrement inférieur au diamètre extérieur de l'interface 8 de sorte que ce dernier est inséré en force dans le manchon 7. L'extrémité 11 du manchon 7 présente un chanfrein 12 pour faciliter l'introduction de l'interface 8.

Dans cette première variante, le dispositif de connexion i est réalisé en une seule pièce par injection bi-matière.

Du fait de la partie arrière 2 réalisée dans une matière dure. le dispositif de connexion 1 est suffisamment résistant à l'arrachement. Gràce à la partie avant 3 réalisée dans une matière souple, le dispositif de connexion 1 se monte facilement. Le dispositif de connexion 1 permet de raccorder directement le tube 5 en matière plastique avec l'interface 8 à embout olive 9. L'étanchéité est assurée par l'assemblage en force des crans sapins 4 dans le tube 5 et du manchon 7 dans l'interface 8. L'assemblage du dispositif de connexion 1 avec l'interface 8 peut être renforcé par un collier à ressort de sorte que la connexion du dispositif avec l'embout olive 9 est démontable à tout moment.

Dans une autre variante représentée sur la figure 4, les parties arrière 2 et avant 3 sont assemblées au moyen d'une soudure miroir 13 prévue entre le bourrelet 6 et la partie avant 3.

Dans la variante représentée sur la figure 5, les parties arrière 2 et avant 3 sont réalisées en une seule pièce dans la même matière souple.
Dans ce cas, la partie arrière 2 est rigidifiée au moyen d'un insert 14 placé à l'intérieur.

La présente invention n'est pas limitée aux exemples de réalisation décrits mais s'étend à toute modification et variante évidente pour un homme du métier. Notamment, le choix des matières pour les parties avant et arrière n'est pas exhaustif. On peut par exemple utiliser des polyamides pour la partie arrière et des thermoplastiques élastomères ou les polyéthers black amides pour la partie avant. Enfin, l'invention peut s'appliquer à tout type de connexion entre un tube ou tuyau souple et un tube/interface plus rigide.

## Revendications

1. Dispositif de connexion (1) pour le raccordement d'un tube en matière synthétique (5) sur un interface (8) présentant un embout de forme (9) réalisé dans un matériau rigide, comprenant une partie arrière (2) rigide présentant des organes d'accrochage (4) et d'étanchéité pour se fixer au tube en matière synthétique (5), caractérisé en ce qu'il comprend une partie avant (3) réalisée dans un matériau souple et constituant un manchon (7) agencé pour être monté autour de l'interface rigide (8).

2. Dispositif (1) selon la revendication 1, caractérisé en ce que la partie arrière (2) est montée à l'intérieur du tube (5).

3. Dispositif (1) selon la revendication 2, caractérisé en ce que les organes d'accrochage et d'étanchéité sont constitués de proéminences (4) permettant un accrochage avec le tube (5).

4. Dispositif (1) selon la revendication 3, caractérisé en ce que les organes d'accrochage et d'étanchéité sont constitués de crans (4) présentant en coupe la forme d'un sapin.

5. Dispositif (1) selon la revendication 4. caractérisé en ce que le diamètre extérieur maximum des crans (4) est supérieur au diamètre intérieur du tube (5) et le diamètre intérieur du manchon (7) est légèrement inférieur au diamètre extérieur de l'interface (8).

6. Dispositif (1) selon la revendication 1. caractérisé en ce que la partie arrière (2) est réalisée dans un matériau thermoplastique dur.

7. Dispositif (1) selon l'une quelconque des revendications précédentes. caractérisé en ce que les parties arrière (2) et avant (3) sont assemblées par soudage.

8. Dispositif (1) selon l'une quelconque des revendications précédentes, caractérisé en ce que les parties arrière (2) et avant (3) sont réalisées en une seule pièce par injection bi-matière.

9. Dispositif (1) selon l'une quelconque des revendications 1 à 8, caractérisé en ce que les parties arrière (2) et avant (3) sont réalisées dans une même matière souple, la partie arrière étant rigidifiée au moyen d'un insert (14).

10. Dispositif selon la revendication 1, caractérisé en ce qu'il comprend une butée (6) prévue entre les parties arrière (2) et avant (3).
